(19) Europäisches Patentamt
European Patent Office
Office européen des brevets

(11) **EP 3 615 626 B1**

(12) **EUROPEAN PATENT SPECIFICATION**

(45) Date of publication and mention
of the grant of the patent:
**29.11.2023  Bulletin 2023/48**

(21) Application number: **18792171.3**

(22) Date of filing: **06.04.2018**

(51) International Patent Classification (IPC):
**C09J 133/10** [(2006.01)]   **C09J 7/38** [(2018.01)]
**C09J 7/50** [(2018.01)]   **C09J 7/00** [(2018.01)]
**C08L 33/08** [(2006.01)]

(52) Cooperative Patent Classification (CPC):
**C09J 7/385; C09J 133/10;** C09J 2203/37;
C09J 2467/006; C09J 2475/003

(86) International application number:
**PCT/MY2018/050016**

(87) International publication number:
**WO 2018/199739 (01.11.2018 Gazette 2018/44)**

(54) **PRESSURE-SENSITIVE ADHESIVE SHEET**

DRUCKEMPFINDLICHE HAFTFOLIE

FEUILLE ADHÉSIVE SENSIBLE À LA PRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.04.2017  JP 2017087545**

(43) Date of publication of application:
**04.03.2020  Bulletin 2020/10**

(73) Proprietors:
• **Nitto Denko Corporation
Ibaraki-shi, Osaka 567-8680 (JP)**
• **Nitto Denko Materials (Malaysia) SDN. BHD.
40300 Shah Alam Selangor (MY)**

(72) Inventors:
• **JOZUKA, Kenta
Ibaraki-Shi
Osaka 567-8680 (JP)**

• **LEE, Min Jie
40300 Shah Alam
Selangor (MY)**
• **CHAI, Lee Lee
40300 Shah Alam
Selangor (MY)**

(74) Representative: **Grünecker Patent- und
Rechtsanwälte
PartG mbB
Leopoldstraße 4
80802 München (DE)**

(56) References cited:
EP-A1- 1 098 944   EP-A1- 2 497 804
WO-A1-2009/129087   WO-A1-2016/006455
US-A1- 2010 099 317   US-A1- 2012 219 795
US-A1- 2013 330 550   US-A1- 2016 333 225

**Description**

[Technical Field]

The present invention relates to a pressure-sensitive adhesive sheet.

The present application claims priority to Japanese Patent Application Publication No. 2017-087545 filed on April 26, 2017.

[Background Art]

In general, pressure-sensitive adhesive (or PSA; the same applies hereinafter) has characteristics to be in a soft solid (viscoelastic) state in a room temperature range and adhere to adherend under some pressure. Because of such properties, PSA is widely used in various fields, for instance, as a PSA sheet that includes a PSA layer and carrier film supporting the PSA layer. In a typical example of the method for forming the PSA layer, a PSA composition comprising an adhesive ingredient in a liquid medium is applied to and allowed to dry on a suitable surface. Water-dispersed PSA compositions using aqueous solvents as liquid media are more desirable from the standpoint of the environmental health, as compared to solvent-based PSA compositions in which adhesive ingredients are dissolved in organic solvents. Technical literatures related to water-dispersed PSA compositions include Patent Documents 1 to 3.

[Citation List]

[Patent Literature]

[Patent Document 1] Japanese Patent Application Publication No. 2015-59132
[Patent Document 2] Japanese Patent Application Publication No. 2012-188511
[Patent Document 3] Japanese Patent No. 5411580
[Patent Document 4] WO 2016/006455 A1

[Summary of Invention]

[Technical Problem]

Various properties are required of PSA depending on the purposes. Among these properties, some are difficult to simultaneously achieve at a high level such that in improving a certain property, some other property has a tendency to decrease. One example of a set of properties in a trade-off relationship is adhesive strength to adherend and ease of rework. The term "rework" refers to the work of removing a PSA sheet from its adherend and re-applying the sheet in case of inadequate application (improper placement, wrinkling, bubble formation, etc.), in case of finding a defect in the adherend after the PSA sheet is applied, etc. A highly re-workable PSA sheet requires removability from adherend without leaving its adhesive (anti-residue properties). However, greater adhesive strength is likely to cause cohesive fracture (fracture inside the PSA layer) and anchor fracture (fracture between the PSA layer and the support substrate) and is less likely to give rise to good ease of rework. In particular, in a PSA sheet with an acrylic PSA layer that comprises acrylic polymer as the base polymer and is supported by plastic film, as compared to a PSA layer formed from a solvent-based PSA composition, a PSA layer formed from a water-dispersed PSA composition tends to have insufficient anchoring and is unlikely to combine adhesive strength and ease of rework at a high level.

As for the means of enhancing anchoring of a PSA layer to plastic film, known techniques modify the plastic film surface by corona discharge treatment, etc. Patent Document 1 teaches the use of an isocyanate-based crosslinking agent to meet prescribed conditions in a water-dispersed PSA composition so as to form a PSA layer with excellent anchoring to resin film. However, studies by the present inventors have found that greater adhesive strength sometimes makes it difficult to achieve sufficient anchoring by these conventional means. According to the art of Patent Document 1, because of the reactivity of the isocyanate group (NCO group) with water, inconsistency may result in quality of PSA sheets due to improper management of preparation conditions of the PSA composition and storage conditions after preparation as well as manufacturing conditions of PSA sheets.

An objective of this invention is thus to provide a PSA sheet that combines adhesive strength and ease of rework at a high level in an embodiment having an acrylic PSA layer formed from a water-dispersed PSA composition on plastic film.

[Solution to Problem]

The PSA sheet provided by the present description comprises a PSA layer formed from a water-dispersed PSA composition, carrier film supporting the PSA layer, and an anchor layer placed between the PSA layer and the carrier film. The carrier film includes plastic film that forms at least its anchor layer side. The PSA layer comprises an acrylic polymer as the base polymer. The acrylic polymer is a polymer of monomers including more than 70 % (by weight) alkyl (meth)acrylate whose ester terminus has an alkyl group with 6 to 10 carbon atoms. The PSA sheet exhibits an anchoring strength of its PSA layer of 15 N/20mm or greater and a peel strength of 6 N/20mm or greater to stainless steel. The PSA sheet has a urethane-based anchor layer as the anchor layer, and the PSA layer comprises a tackifier resin, which is selected from the group, comprising rosin-based tackifier resins and rosin derivative tackifier resins, and combinations thereof.

The PSA sheet in such an embodiment has at least the prescribed adhesive strength and also high anchoring strength; and therefore, it shows excellent anti-residue properties. Such a PSA sheet can combine adhesive strength and ease of rework at a high level. In the following, the peel strength to stainless steel may be referred to as "to-SUS adhesive strength."

When the PSA sheet disclosed herein is placed with no applied pressure on a horizontally-held glass plate, at 5 seconds after placement, it preferably shows at least 60 % wet surface area wherein the percent wet surface area is defined as the ratio of the surface area in contact between the glass plate and the PSA layer. The PSA sheet with such great initial wettability to an adherend surface is preferable because it quickly bonds to the adherend surface with weak bonding pressure.

In some embodiments of the PSA sheet disclosed herein, the anchor layer has a thickness less than 10 $\mu$m. The anchor layer in such a thickness is less likely to develop anchoring fracture due to fracture inside the anchor layer and is likely to satisfy the aforementioned anchoring strength.

The PSA layer comprises the defined tackifier resin. Proper use of the tackifier resin can increase the adhesive strength, making it easier to obtain a PSA sheet that combines aforementioned adhesive strength and anchoring strength.

In an embodiment where the PSA layer comprises a tackifier resin, the tackifier resin content in the PSA layer can be, for instance, 5 parts by weight or greater and 30 parts by weight or less to 100 parts by weight of the acrylic polymer. When the tackifier resin content is in this range, a PSA sheet that combines adhesive strength and ease of rework at a high level can be favorably obtained.

In some embodiments of the PSA sheet disclosed herein, the acrylic polymer has a glass transition temperature (Tg) of -50 °C or lower. In such an embodiment, the resulting PSA sheet is likely to satisfy the percent wet surface area.

In some embodiments, the plastic film is polyester film. In the PSA sheet in such an embodiment, it is particularly meaningful to combine adhesive strength and ease of rework by applying the art disclosed herein.

The PSA sheet disclosed herein can be preferably made in an embodiment where the anchoring strength is greater by at least 4 N/20mm than the adhesive strength. The PSA sheet that shows such sufficiently high anchoring strength relative to adhesive strength is preferable because it provides great ease of rework while being highly adhesive.

[Brief Description of Drawings]

Fig. 1 shows a cross-sectional diagram schematically illustrating an example of the constitution of the PSA sheet.

Fig. 2 shows a cross-sectional diagram schematically illustrating another example of the constitution of the PSA sheet.

Fig. 3 shows a diagram schematically illustrating the method for testing the anchoring strength.

[Description of Embodiments]

Preferred embodiments of the present invention are described below. Matters necessary to practice this invention other than those specifically referred to in this description can be understood by a person skilled in the art based on the disclosure about implementing the invention in this description and common general knowledge at the time of application. The present invention can be practiced based on the contents disclosed in this description and common technical knowledge in the subject field. In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent the accurate size or reduction scale of an actual product provided.

As used herein, the term "(meth)acryloyl" comprehensively refers to acryloyl and methacryloyl. Similarly, the term "(meth)acrylate" comprehensively refers to acrylate and methacrylate, and the term "(meth)acryl" comprehensively refers to acryl and methacryl.

The term "acrylic polymer" in this description refers to a polymer comprising, as a monomeric unit constituting the polymer, more than 50 % by weight of a monomeric unit derived from an acrylic monomer. The acrylic monomer refers to a monomer derived from a monomer having at least one (meth)acryloyl group per molecule.

The term "water-dispersed" in the present description refers to a state where components are at least partially dispersed in water. For instance, the term "water-dispersed PSA composition" refers to a composition comprising a PSA composition and water while being in a state where the PSA composition is at least partially dispersed in water. The water-dispersed state referred to here also includes a suspended state and an emulsified state.

<Examples of constitution of PSA sheet>

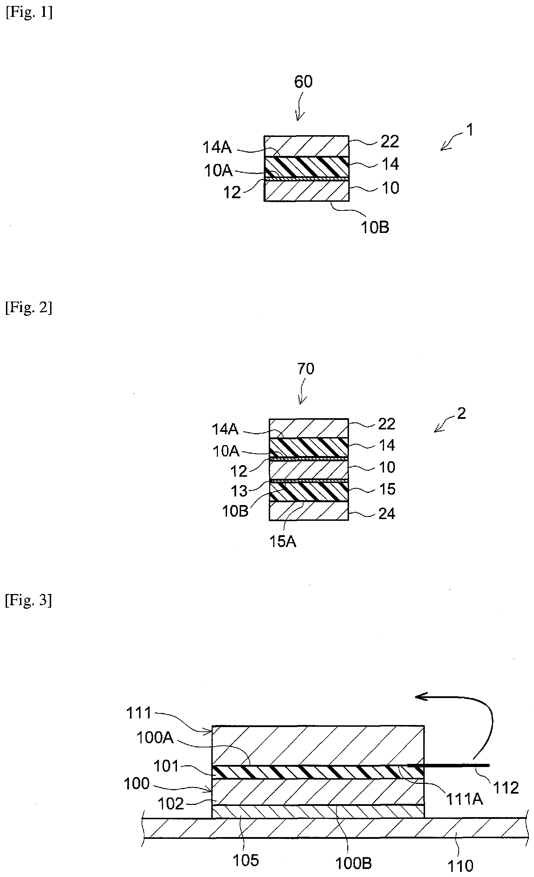

Fig. 1 shows an example of the constitution of the PSA sheet disclosed herein. PSA sheet 1 is formed as an adhesively single-faced PSA sheet in an embodiment where on the first face 10A of carrier film 10, anchor layer 12 and PSA layer 14 are layered in this order. Of carrier film 10, at least the anchor layer 12 side (i.e. the first face 10A side) is formed with plastic film. In the example shown in Fig. 1, carrier film 10 formed of plastic film is used. For instance, as shown in Fig. 1, PSA sheet 1 prior to use (before applied to adherend) may be in a form of a release liner-bearing PSA sheet 60 in which the surface (adhesive face) 14A of PSA layer 14 is protected with release liner 22 having a release face at least on the PSA layer side. The second face 10B (the reverse side of the first face 10A, or the backside) can be releasable or non-releasable. When the second face 10B of carrier film 10 is releasable, PSA sheet 1 before used may be in a wound or layered form where the second face 10B of carrier film 10 is in contact with and protect the adhesive face 14A. This form is advantageous, requiring no release liner 22.

Fig. 2 shows another example of the constitution of the PSA sheet disclosed herein. PSA sheet 2 is formed as an adhesively double-faced PSA sheet in which anchor layers 12 and 13 are provided to the first and second faces 10A and 10B of carrier film 10, respectively; and PSA layers 14 and 15 are provided onto the anchor layers 12 and 13, respectively. The first and second faces 10A and 10B of carrier film 10 are formed from the same or different plastic film. In the examples shown in Fig. 2, carrier film 10 formed of a plastic film sheet is used. PSA sheet 2 prior to use may be, for instance, as shown in Fig. 2, in a form of a release liner-bearing PSA sheet 70 in which the surfaces (adhesive faces) 14A and 15A of PSA layers 14 and 15 are protected with release liners 22 and 24 each having a release face at least on the PSA layer side. Alternatively, release liner 24 may be omitted; and the PSA sheet 2 prior to use may be in a form where release liner 22 having a release face on each side is used and the PSA sheet is wound to bring the other adhesive face 15A in contact with the reverse side of release liner 22 so that the adhesive face 15A is also protected with release liner 22.

In the PSA sheet 2 shown in Fig. 2, the anchor layers 12 and 13 may be identical or different in composition, thickness, formation method, etc. Alternatively, the anchor layer 13 may be omitted from the constitution shown in Fig. 2 and the PSA layer 15 may be directly provided to the second face 10B of carrier film 10. As the carrier film in the PSA sheet in such an embodiment, it is preferable to use, for instance, carrier film having a laminate structure that includes plastic film forming the first face side and a non-plastic film layer (e.g. paper, fabric, etc.) forming the second face side. In the PSA sheet 2 shown in Fig. 2, the PSA layers 14 and 15 may be identical or different in composition, thickness, formation method, etc.

As the release liner, any conventional release paper or the like can be used without any particular limitations. For example, a release liner having a release layer on a surface of a liner substrate such as resin film and paper; a release liner formed from a low adhesive material such as fluorine-based polymer (polytetrafluoroethylene, etc.) and polyolefin-based resin (polyethylene, polypropylene, etc.); or the like can be used. The release layer can be formed, for instance, by subjecting the liner substrate to a surface treatment with a release agent such as a silicone-based, long-chain alkyl-based, fluorine-based, or molybdenum disulfide-based release agent.

<Carrier film>

The carrier film that supports (backs) the PSA layer is not particularly limited and can be any film as long as it includes plastic film that constitutes at least the anchor layer side of the carrier film. Examples of the plastic film include polyolefin film formed of a polyolefin such as polyethylene (PE), polypropylene (PP), and ethylene-propylene copolymer; polyester film formed of a polyester such as polyethylene terephthalate (PET), polyethylene naphthalate (PEN), and polybutylene naphthalate (PBN); polyvinyl chloride resin film; vinyl acetate resin film formed of a vinyl acetate resin such as polyvinyl acetate and ethylene-vinyl acetate copolymer; polyimide resin film; polyamide resin film formed of a polyamide resin such as nylon and aramid; fluororesin film; cellophane; a rubber sheet formed of various types of rubber such as natural rubber, butyl rubber, chloroprene rubber, ethylene propylene rubber, and ethylene propylene diene rubber. The concept of plastic film here typically refers to non-porous film and is distinguished from so-called nonwoven and woven fabrics and foam sheets.

In some embodiments of the PSA sheet disclosed herein, carrier film formed of a plastic film sheet can be preferably used. The plastic film may be monolayer film (e.g. polyester film) comprising one, two or more species of materials described earlier or multilayer film comprising several layers formed from different materials. The plastic film can be unstretched or stretched (uniaxially stretched, biaxially stretched, etc.). In some embodiments of the PSA sheet disclosed herein, it is preferable to use monolayer or multilayer plastic film in which at least the anchor layer side is formed of polyester or a polyolefin.

Polyester film is an example of plastic film preferable from the standpoint of the size stability, cost, ease of processing, peel strength, etc. For instance, monolayer polyester film can be preferably used. As the polyester film, various types of film can be used, which are obtained by molding film from a polymer material whose primary component (typically a component accounting for more than 50 % by weight) is polyester. The polyester here refers to a polycondensate of a polyvalent carboxylic acid and a polyol (typically a dicarboxylic acid and a diol). Examples of the polyester film include PET film, PEN film and PBN film. In particular, PET film is preferable.

In other embodiments of the PSA sheet disclosed herein, the carrier film may have a multilayer structure that includes plastic film forming the anchor layer side and a non-plastic film layer laminated on the backside thereof (on the reverse side of the anchor layer side). As the non-plastic film layer, paper, a fabric, a foam sheet, metal foil, a composite of these and the like can be used. Examples of paper include Japanese paper, Kraft paper, glassine paper, high-grade paper, synthetic paper, and top-coated paper. Examples of fabrics include woven fabrics and nonwoven fabrics of pure or blended yarn of various fibrous materials. Examples of fibrous materials include cotton, staple cloth, Manila hemp, pulp, rayon, acetate fiber, polyester fiber, polyvinyl alcohol fiber, polyamide fiber, polyolefin fiber, and glass fiber. Examples of foam sheets include polyurethane foam sheets, polychloroprene rubber foam sheets, etc. Examples of metal foil include aluminum foil and copper foil.

To the plastic film, as necessary, various additives may be added such as filler (inorganic filler, organic filler, etc.), anti-aging agent, antioxidant, UV absorber, antistatic agent, slip agent, plasticizer, and colorant (pigment, dye, etc.).

The thickness of the plastic film is not particularly limited and can be suitably selected in accordance with the composition of the plastic film, the constitution of the carrier film, the purpose of the PSA sheet, etc. The thickness of the plastic film can be, for instance, in a range of 1 $\mu$m to 500 $\mu$m. From the standpoint of the conformability to the surface structure of the adherend and the ease of processing the PSA sheet, the thickness of the plastic film can be, for instance, 200 $\mu$m or less, 100 $\mu$m or less, 50 $\mu$m or less, or even 30 $\mu$m or less. From the standpoint of the strength and handling properties of the PSA sheet, in some embodiments, the thickness of the plastic film can be, for instance, 3 $\mu$m or greater, 5 $\mu$m or greater, 10 $\mu$m or greater, 15 $\mu$m or greater, or even 20 $\mu$m or greater. For instance, when the PSA sheet is applied to an adherend having a curved or uneven surface structure, with increasing thickness of the plastic film, it tends to be difficult to apply sufficient bonding pressure while having the PSA sheet conforming to the surface structure of the adherend. Thus, it is more meaningful that it shows good initial wettability, that is, an ability to quickly bond to the adherend with no applied pressure or with light bonding pressure.

The thickness of the carrier film is not particularly limited. It can be suitably selected in accordance with the composition and the constitution of the carrier film as well as the purpose of the PSA sheet, etc. For instance, carrier film of 2 $\mu$m to 5 mm in thickness can be used. From the standpoint of the strength and handling properties of the PSA sheet, in some embodiments, the thickness of the carrier film can be, for instance, 5 $\mu$m or greater, 10 $\mu$m or greater, 15 $\mu$m or greater, or even 20 $\mu$m or greater. From the standpoint of the conformability to the surface structure of the adherend and the ease of processing the PSA sheet, the thickness of the carrier film can be, for instance, 500 $\mu$m or less, 200 $\mu$m or less, 100 $\mu$m or less, 50 $\mu$m or less, or even 30 $\mu$m or less. When the carrier film is entirely made of plastic film, the thickness of the carrier film is the same as the thickness of the plastic film.

<Anchor layer>

The PSA sheet has a urethane-based anchor layer as the anchor layer, which can be selected so that resulting PSA sheet satisfies certain anchoring strength. In an embodiment having a urethane-based anchor layer between the carrier film and the PSA layer, the resulting PSA sheet is likely to have great anchoring strength and excellent anti-residue properties.

The polyol forming the urethane bond in the urethane-based anchor layer can be one, two or more species selected from various polyols known to be generally usable in synthesis of polyurethane. Favorable examples include aliphatic and alicyclic diols. Specific examples include ethylene glycol, 1,2-propylene glycol, 1,3-propanediol, 2-methyl-1,3-propanediol, 1,2-butanediol, 1,3-butanediol, 1,4-butanediol, 1,5-pentanediol, 1,6-hexanediol, 3-methyl-1,5-pentanediol, neopentyl glycol, diethylene glycol, dipropylene glycol, 2,2,4-trimethyl-1,5-pentanediol, 2-ethyl-2-butylpropanediol, 1,9-nonanediol, 2-methyloctanediol, and 1,10-decanediol. A preferable example is 1,6-hexanediol.

In the urethane-based anchor layer, the isocyanate group forming the urethane bond may be derived from various species of polyvalent isocyanate compound. The polyvalent isocyanate compound can be one, two or more species selected from various compounds known to be generally usable in synthesis of polyurethane. Examples include aromatic isocyanates such as tolylene diisocyanate and xylene diisocyanate; alicyclic isocyanates such as isophorone diisocyanate; and aliphatic isocyanates such as hexamethylene diisocyanate. More specific examples include lower aliphatic polyisocyanates such as butylene diisocyanate and hexamethylene diisocyanate; alicyclic isocyanates such as cyclopentylene diisocyanate, cyclohexylene diisocyanate, and isophorone diisocyanate; aromatic diisocyanates such as 2,4-tolylene diisocyanate, 2,6-tolylene diisocyanate, 4,4' -diphenylmethane diisocyanate, and xylylene diisocyanate; isocyanate adducts such can be selected so that the resulting PSA sheet satisfies certain anchoring strength. as trimethylolpropane-tolylene diisocyanate trimer adduct, trimethylolpropane-hexamethylene diisocyanate trimer adduct, and isocyanurate of hexamethylene diisocyanate. Favorable examples include 2,4-tolylene diisocyanate and 2,6-tolylene diisocyanate. It can be a mixture of these at an arbitrary ratio (e.g. a mixture containing 2,4-tolylene diisocyanate and 2,6-tolylene diisocyanate at a mass ratio of 70:30 to 90:10).

The inclusion of urethane bonds in the anchor layer can be accessed by, for instance, a peak of urethane bonds detected by ATR FT-IR analysis (attenuated total reflection Fourier transform infrared spectrometry). It can also be accessed by conducting one, two or more of $^{13}$C-NMR, $^{1}$H-NMR, and FT-IR analyses (all three in a preferable embodiment) with respect to decomposition products obtained by heating the anchor layer immersed in methanol.

The method for forming the anchor layer is not particularly limited. A known method can be suitably employed. In an example of the anchor layer-forming method, a known method covers premanufactured carrier film with an anchor layer-forming material. Examples include a method where the anchor layer-forming material is dissolved or dispersed in a suitable solvent and the liquid-form composition is applied and allowed to dry; a method where the anchor layer-forming material is heated to melt, applied, and cooled to solidify; and a method where a precursor of the anchor layer-forming material is applied to resin film and reactively cured. These methods can be combined with a crosslinking reaction by heat, light, oxygen, moisture, etc., to form the anchor layer.

In another example of the anchor layer-forming method, during the manufacturing process of plastic film used as the carrier film or a component thereof, the anchor layer-forming material is laminated onto the plastic film. For instance, it is possible to employ a method where film is molded from a plastic film-forming material, covered with the anchor layer-forming material by coating, etc., and then stretched. It can be covered with the anchor layer-forming material before completion of stretching of the plastic film. For instance, it can be carried out before the plastic film is stretched, when uniaxial stretching is completed in manufacturing of biaxially stretched film, after start of uniaxial stretching and before completion of the stretching, and so on. This method can be preferably used in an embodiment where, for instance, the plastic film is polyester film, polypropylene film, etc. It is particularly preferable that the plastic film is polyester film (e.g. PET film).

The plastic film surface before covered with the anchor layer-forming material can be subjected as necessary to heretofore known surface treatments such as corona discharge treatment, plasma treatment, UV irradiation, acid treatment, alkali treatment, and flame treatment. These surface treatments may enhance, for instance, the tightness between the anchor layer and the plastic film, that is, the anchoring of the anchor layer to the carrier film.

The thickness of the anchor layer is not particularly limited. For instance, it can be selected from a range between 0.002 $\mu$m and 20 $\mu$m. From the standpoint of the ease of forming the anchor layer and uniform anchoring effects, the thickness of the anchor layer can be, for instance, 0.005 $\mu$m or greater, usually suitably 0.01 $\mu$m or greater, 0.02 $\mu$m or greater, or even 0.025 $\mu$m or greater. From the standpoint of preventing internal fracture of the anchor layer and a decrease in anchoring strength (and further the occurrence of left-over adhesive residue) due to interfacial peeling between the anchor layer and the plastic film, in some embodiments, the thickness of the anchor layer can be, for instance, less than 10 $\mu$m, 5 $\mu$m or less, 1 $\mu$m or less, 0.5 $\mu$m or less, less than 0.1 $\mu$m, or even less than 0.05 $\mu$m.

The thickness of the anchor layer can be obtained by analyzing a cross section of the PSA sheet by transmittance electron microscopy (TEM). For instance, by heavy metal staining (ruthenium oxide staining) in order to make the anchor layer distinguishable followed by resin embedding and ultramicrotomy, a specimen section can be prepared and analyzed by TEM to determine the thickness of the anchor layer. For instance, as the TEM, a transmission electron microscope under model number H-7650 available from Hitachi, Ltd. can be used. In working examples described later, the same measurement method is used.

In an embodiment where only one side of the carrier film is provided with the anchor layer, the other side of the carrier film, that is, the anchor layer-free side (backside) may be subjected as necessary to a surface treatment (e.g. corona discharge treatment, plasma treatment, UV irradiation, acid treatment, alkali treatment, and flame treatment) to enhance the tightness between the carrier film and the layer (a PSA layer) placed thereon or a surface treatment to provide removability to the carrier film, that is, release treatment. The release treatment can be carried out, using a release agent such as a silicone-based kind, long-chain alkyl-based kind, fluorine-based kind, and molybdenum sulfide. By subjecting the backside of the carrier film to release treatment, effects to facilitate unwinding of a wound roll of the PSA sheet, etc., can be obtained.

The carrier film may be provided with antistatic properties. The antistaticity of the carrier film can be provided by forming an antistatic layer on one or each face of the carrier film, by fabricating the carrier film using a material that includes an antistatic agent, etc. From the standpoint of increasing the anchoring strength of the PSA layer, it is advantageous that the face provided with the anchor layer is not provided with an antistatic layer, that is, the anchor layer is directly provided to the plastic film surface. In some embodiments, it is preferable to employ a method for providing antistaticity in which the carrier film is fabricated using a material that includes an antistatic agent and no antistatic layer is provided to the carrier film.

<PSA layer>

The PSA layer of the PSA sheet disclosed herein is formed using a water-dispersed PSA composition. The water-dispersed PSA composition is a PSA composition where at least some of the PSA layer-forming components are dispersed in an aqueous medium. Here, the aqueous medium refers to a medium formed of water or a solvent mixture (aqueous solvent) comprising water as the primary component. A typical example of the water-dispersed PSA composition in the art disclosed herein is an emulsion-based PSA composition.

(Acrylic polymer)

The PSA layer of the PSA sheet disclosed herein is an acrylic PSA layer that comprises an acrylic polymer as the base polymer. The base polymer here refers to the primary component among the polymers. As used herein, the term "primary component" refers to a component that accounts for more than 50 % by weight unless otherwise specified.

In the art disclosed herein, the acrylic polymer as the base polymer of the acrylic PSA layer is a polymer of a starting monomer mixture (monomers) that comprises an alkyl (meth)acrylate whose ester terminus has an alkyl group with 6 to 10 carbon atoms as the primary monomer and further comprises a secondary monomer copolymerizable with the primary monomer. The primary monomer here refers to a component that accounts for more than 50 % by weight of the monomers. In the following, the number of carbon atoms ranging between X and Y may be indicated as $C_{X-Y}$. According to this, for instance, an alkyl (meth)acrylate whose ester terminus an alkyl group with 6 to 10 carbon atoms may be indicated as a $C_{6-10}$ alkyl (meth)acrylate.

Monomers with high $C_{6-10}$ alkyl (meth)acrylate content is likely to form a PSA layer having high initial wettability to adherend surfaces. This is advantageous from the standpoint of obtaining a PSA sheet with a high percent wet surface area described later. The ratio of the $C_{6-10}$ alkyl (meth)acrylate in the total monomers is 70 % by weight or higher, 75 % by weight or higher, or even 80 % by weight or higher. From the standpoint of enhancing the cohesion of the PSA layer to prevent cohesive fracture, the ratio of the $C_{6-10}$ alkyl (meth)acrylate in the total monomers is usually suitably 99.5 % by weight or lower; it can be 99 % by weight or lower, 98 % by weight or lower, or even 97 % by weight or lower.

Specific examples of $C_{6-10}$ alkyl (meth)acrylates that can be used as the primary monomer include n-hexyl (meth)acrylate, n-heptyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, and isodecyl (meth)acrylate. These can be used singly as one species or in a combination of two or more species. Among these, $C_{6-10}$ alkyl acrylates are preferable and $C_{8-9}$ alkyl acrylates are more preferable. Specific examples of $C_{8-9}$ alkyl acrylates include 2-ethylhexyl acrylate (2EHA), n-octyl acrylate, isooctyl acrylate, n-nonyl acrylate and isononyl acrylate (INA). In particular, 2EHA and INA are preferable. 2EHA is particularly preferable.

In some embodiments, of the $C_{6-10}$ alkyl (meth)acrylate in the monomers forming the acrylic polymer, the ratio of the $C_{6-10}$ alkyl acrylate (more preferably $C_{8-9}$ alkyl acrylate) can be, for instance, 70 % by weight or higher, 80 % by weight or higher, 90 % by weight or higher, 95 % by weight or higher, 98 % by weight or higher, or even essentially 100 % by weight.

The secondary monomer copolymerizable with the alkyl (meth)acrylate as the primary monomer may be useful in introducing crosslinking points into the acrylic polymer and increasing the cohesive strength of the acrylic polymer.

Examples of the compound that can be used as the secondary monomer include alkyl (meth)acrylates excluding $C_{6-10}$ alkyl (meth)acrylates. For instance, one, two or more species can be selected and used from the group consisting of $C_{1-5}$ alkyl (meth)acrylates and $C_{11-20}$ alkyl (meth)acrylates. Specific examples include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, stearyl (meth)acrylate, isostearyl (meth)acrylate, nonadecyl (meth)acrylate, and eicosyl (meth)acrylate. Favorable examples include methyl acryltate (MA), n-butyl acrylate (BA), and t-butyl acrylate.

In the art disclosed herein, from the standpoint of the ease of balancing the adhesive properties, it is usually suitable that the ratio of the $C_{1-20}$ alkyl (meth)acrylate in the total monomers is in a range above 50 % by weight up to 99.5 % by weight. While no particular limitations are imposed, the ratio of the $C_{1-20}$ alkyl (meth)acrylate in the total monomers can be, for instance, 75 % to 99.5 % by weight, 85 % to 99 % by weight, 90 % to 98.5 % by weight, or even 95 % to 98.5 % by weight.

Other examples of the compound that can be used as the secondary monomer include functional group-containing monomers as exemplified below:

Carboxy group-containing monomers: for example, ethylenic unsaturated mono-carboxylic acids such as acrylic acid (AA), methacrylic acid (MAA) and crotonic acid; ethylenic unsaturated dicarboxylic acids such as maleic acid, itaconic acid and citraconic acid as well as anhydrides thereof (maleic acid anhydride, itaconic acid anhydride, etc.).

Hydroxy group-containing monomers: for example, hydroxyalkyl (meth)acrylates such as 2-hydroxyethyl (meth)acrylate, 2-hydroxypropyl (meth)acrylate, 3-hydroxypropyl (meth)acrylate, and 4-hydroxybutyl (meth)acrylate; unsaturated alcohols such as vinyl alcohol and allyl alcohol.

Amide group-containing monomers: for example, (meth)acrylamide, N,N-dimethyl(meth)acrylamide, N-butyl(meth)acrylamide, N-methylol(meth)acrylamide, N-methylolpropane(meth)acrylamide, N-methoxymethyl(meth)acrylamide, and N-butoxymethyl(meth)acrylamide.

Amino group-containing monomers: for example, aminoethyl (meth)acrylate, N,N-dimethylaminoethyl (meth)acrylate, and t-butylaminoethyl (meth)acrylate.

Epoxy group-containing monomers: for example, glycidyl (meth)acrylate, methylglycidyl (meth)acrylate, and allyl glycidyl ether.

Cyano group-containing monomers: for example, acrylonitrile and methacrylonitrile.

Keto group-containing monomers: for example, diacetone (meth)acrylamide, diacetone (meth)acrylate, vinyl methyl ketone, vinyl ethyl ketone, allyl acetoacetate, and vinyl acetoacetate.

Monomers having nitrogen atom-containing rings: for example, N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, and N-(meth)acryloyl morpholine.

Alkoxysilyl group-containing monomers: for example, 3-(meth)acryloxypropyl)trimethoxysilane, 3-(meth)acryloxypropyl)triethoxysilane, 3-(meth)acryloxypropyl)methyldimethoxysilane, and 3-(meth)acryloxypropyl)methyldiethoxysilane.

The functional group-containing monomers can be used singly as one species or in a combination of two or more species. Among the functional group-containing monomers, for possible contribution to an increase in anchoring strength due to interactions with the anchor layer, carboxy group-containing monomers, hydroxy group-containing monomers, amide group-containing monomers, cyano group-containing monomers and monomers having nitrogen-containing rings are preferable, with carboxy group-containing monomers being more preferable. Favorable examples of carboxy group-containing monomers include AA and MAA.

In a preferable embodiment, as the functional group-containing monomer, AA and MAA are used together. This can bring about a PSA sheet that provides higher performance (e.g. with excellent repulsion resistance). The AA to MAA weight ratio (AA/MAA) is not particularly limited. For instance, it may range between about 0.1 and 10. In some embodiments, the weight ratio (AA/MAA) can be, for instance, about 0.3 or higher, or even about 0.5 or higher. The weight ratio (AA/MAA) can be, for instance, about 4 or lower, or even about 3 or lower. The combined use of AA and MAA at such a weight ratio tends to bring about sufficient effects to enhance the adhesive properties and also tends to make a PSA sheet with adhesive properties that are highly stable with aging after fabrication.

In some embodiments, the acrylic polymer preferably includes an alkoxysilyl group-containing monomer copolymerized therein. The alkoxysilyl group-containing monomer is an ethylenic unsaturated monomer having at least one (preferably two or more, e.g. two or three) alkoxysilyl group per molecule. Specific examples thereof are as mentioned earlier. For the alkoxysilyl group-containing monomer, solely one species or a combination of two or more species can be used. By copolymerizing the alkoxysilyl group-containing monomer, upon the condensation reaction of the silanol group (silanol condensation), a crosslinked structure can be introduced in the PSA formed from the PSA composition comprising the acrylic polymer.

When a functional group-containing monomer is copolymerized into the acrylic polymer, the ratio of the functional group-containing monomer to the total monomers constituting the acrylic polymer is not particularly limited. In some embodiments, the ratio of the functional group-containing monomer can be, for instance, 0.1 % by weight or more of the total monomers. From the standpoint of obtaining greater effects to increase the cohesive strength, it can be 0.5 % by weight or higher, 1 % by weight or higher, or even 1.5 % by weight or higher. In view of the balance among the adhesive properties, the ratio of the functional group-containing monomer is usually suitably 40 % by weight or less of the total monomers. It can be 30 % by weight or less, or even 20 % by weight or less. From the standpoint of enhancing the initial wettability to adherend, in some embodiments, the ratio of the functional group-containing monomer can be 15 % by weight or less of the total monomers, or even 10 % by weight or less.

In an embodiment where the monomers include a carboxy group-containing monomer, from the standpoint of the cohesion, etc., the ratio of the carboxy group-containing monomer in the total monomers can be, for instance, 0.1 % by weight or higher. From the standpoint of obtaining greater effects, it can be 0.5 % by weight or higher, 1 % by weight or higher, or even 1.5 % by weight or higher. The ratio of the carboxy group-containing monomer can be, for instance, 15 % by weight or less, 10 % by weight or less, or even 5 % by weight or less. From the standpoint of enhancing the initial wettability to adherend, in some embodiments, the ratio of the carboxy group-containing monomer can be, for instance, 3.5 % by weight or less, 3 % by weight or less, or even 2.5 % by weight or less. In an embodiment where the monomers include an alkoxysilyl group-containing monomer, the ratio of the alkoxysilyl group-containing monomer in the total monomers can be, for instance, 0.005 % by weight or higher; it is usually suitably 0.01 % by weight or higher. From the standpoint of obtaining good initial wettability, the ratio of the alkoxysilyl group-containing monomer can be, for instance, 0.1 % by weight or less. It is usually suitably 0.05 % by weight or less.

For the purpose of increasing the cohesive strength of the acrylic polymer, etc., other co-monomer(s) besides the aforementioned secondary monomers can be used. Examples of such co-monomers include vinyl ester-based monomers such as vinyl acetate and vinyl propionate; aromatic vinyl compounds such as styrene, substituted styrenes ($\alpha$-methylstyrene, etc.), and vinyl toluene; cycloalkyl (meth)acrylates such as cyclohexyl (meth)acrylate, cyclopentyl (meth)acrylate, and isobornyl (meth)acrylate; aromatic ring-containing (meth)acrylates such as aryl (meth)acrylate (e.g. phenyl (meth)acrylate), aryloxyalkyl (meth)acrylate (e.g. phenoxyethyl (meth)acrylate), and arylalkyl (meth)acrylate (e.g. benzyl (meth)acrylate); olefinic monomers such as ethylene, propylene, isoprene, butadiene, and isobutylene; chlorine-containing monomers such as vinyl chloride and vinylidene chloride; isocyanate group-containing monomers such as 2-(meth)acryloyloxyethyl isocyanate; alkoxy group-containing monomers such as methoxyethyl (meth)acrylate, and ethoxyethyl (meth)acrylate; and vinyl ether-based monomers such as methyl vinyl ether and ethyl vinyl ether.

Other examples of the other co-monomers excluding the secondary monomer include monomers having a plurality of functional groups in a molecule. Illustrative examples of such polyfunctional monomers include 1,6-hexanediol di(meth)acrylate, ethylene glycol di(meth)acrylate, diethylene glycol di(meth)acrylate, triethylene glycol di(meth)acrylate, tetraethylene glycol di(meth)acrylate, (poly)ethylene glycol di(meth)acrylate, propylene glycol di(meth)acrylate, (polypropylene glycol di(meth)acrylate, neopentylglycol di(meth)acrylate, pentaerythritol di(meth)acrylate, trimethylolpropane tri(meth)acrylate, pentaerythritol tri(meth)acrylate, dipentaerythritol hexa(meth)acrylate, glycerol di(meth)acrylate, epoxy acrylate, polyester acrylate, urethane acrylate, divinylbenzene, butyl di(meth)acrylate and hexyl di(meth)acrylate.

The amount of the other comonomer(s) used excluding the secondary monomer can be suitably selected according to the purpose and intended use, and thus is not particularly limited. For instance, it is preferable to be 10 % by weight or less of the total monomers. In some embodiments, the acrylic polymer can be a polymer of monomers essentially free of a comonomer besides the secondary monomer(s).

The Tg of the acrylic polymer is not particularly limited. For instance, it can be -30 °C or lower. In some embodiments, the Tg of the acrylic polymer is preferably -40 °C or lower, more preferably -45 °C or lower, or even more preferably -50 °C or lower. With decreasing Tg of the acrylic polymer, the initial wettability tends to improve in general. From such a standpoint, in some embodiments, the Tg of the acrylic polymer can be, for instance, -55 °C or lower, or even -57 °C or lower. From the standpoint of increasing the cohesive strength of the PSA layer, the Tg of the acrylic polymer is preferably -75 °C or higher. For instance, it can be -70 °C or higher, or even -65 °C or higher. The Tg of the acrylic polymer can be adjusted by the types and relative amounts of monomers used for synthesis of the polymer.

Here, the Tg of an acrylic polymer refers to the value determined by the Fox equation based on the composition of the monomers. As shown below, the Fox equation is a relational expression between the Tg of a copolymer and glass transition temperatures Tgi of homopolymers of the respective monomers constituting the copolymer.

$$1/Tg = \Sigma(Wi/Tgi)$$

In the Fox equation, Tg represents the glass transition temperature (unit: K) of the copolymer, Wi the weight fraction (copolymerization ratio by weight) of a monomer i in the copolymer, and Tgi the glass transition temperature (unit: K) of homopolymer of the monomer i. The Tg of the acrylic polymer can be adjusted by the types and relative amounts of monomers used for synthesis of the polymer.

As the glass transition temperatures of homopolymers used for determining the Tg value, values found in publicly known documents are used. For example, with respect to the monomers listed below, as the glass transition temperatures of homopolymers of the monomers, the following values are used:

| | |
|---|---|
| 2-ethylhexyl acrylate | -70 °C |
| n-butyl acrylate | -55 °C |
| methyl methacrylate | 105 °C |
| methyl acrylate | 8 °C |
| acrylic acid | 106 °C |
| methacrylic acid | 228 °C |

With respect to the glass transition temperatures of homopolymers of monomers other than those listed above, values given in "Polymer Handbook" (3rd edition, John Wiley & Sons, Inc., Year 1989) are used. When the literature provides two or more values, the highest value is used.

With respect to monomers for whose homopolymers no glass transitions temperatures are given in *Polymer Handbook,* either, values obtained by the following measurement method are used (see Japanese Patent Application Publication No. 2007-51271). In particular, to a reaction vessel equipped with a thermometer, a stirrer, a nitrogen inlet and a condenser, are added 100 parts by weight of monomer, 0.2 part by weight of azobisisobutyronitrile, and 200 parts by weight of ethyl acetate as a polymerization solvent, and the mixture is stirred for one hour under a nitrogen gas flow. After oxygen is removed in this way from the polymerization system, the mixture is heated to 63 °C and the reaction is carried out for 10 hours. Then, it is cooled to room temperature, and a homopolymer solution having 33 % by mass solids content is obtained. Then, this homopolymer solution is applied onto a release liner by flow coating and allowed to dry to prepare a test sample (a sheet of homopolymer) of about 2 mm thickness. This test sample is cut out into a disc of 7.9 mm diameter and is placed between parallel plates; and while applying a shear strain at a frequency of 1 Hz using a rheometer (ARES, available from Rheometrics Scientific, Inc.), the viscoelasticity is measured in the shear mode over a temperature range of -70 °C to 150 °C at a heating rate of 5 °C/min; and the temperature value at the maximum of the tan $\delta$ curve is taken as the Tg of the homopolymer.

The method for obtaining the acrylic polymer is not particularly limited. Various polymerization methods known as synthetic means for acrylic polymers can be suitably employed, such as a solution polymerization method, emulsion polymerization method, bulk polymerization method, suspension polymerization method, photopolymerization method, etc. As for preferable polymerization methods, the emulsion polymerization method is cited. The embodiment of emulsion polymerization is not particularly limited. Various monomer supply methods, polymerization conditions, materials and the like similar to those for heretofore known general emulsion polymerization can be suitably used to carry out polymerization. Examples of suitable monomer supply methods include an all-at-once supply method where all starting monomers are supplied at once, continuous (dropwise) supply method, portionwise (dropwise) supply method, etc. Starting monomers can be added dropwise as an aqueous emulsion. The polymerization temperature can be about 20 °C or higher (usually 40 °C or higher) while it is suitably about 100 °C or lower (usually 80 °C or lower).

The initiator used for the polymerization can be suitably selected in accordance with the type of polymerization method among heretofore known polymerization initiators. Examples include, but not limited to, azo-based initiators such as 2,2'-azobisisobutyronitrile, 2,2'-azobis(2-methylpropionamidine) disulfate salt, 2,2'-azobis(2-methylpropionamidine) dihydrochloride salt, 2,2'-azobis(2-amidinopropane) dihydrochloride salt, 2,2'-azobis[N-(2-carboxyethyl)-2-methylpropionamidine] hydrate, 2,2'-azobis(N,N'-dimethylene isobutylamidine), 2,2'-azobis[2-(2-imidazolin-2-yl)propane] dihydrochloride salt, etc.; persulfate salt-based initiators such as potassium persulfate, ammonium persulfate, etc.; peroxide-based initiators such as benzoyl peroxide, t-butyl hydroperoxide, hydrogen peroxide, etc.; substituted ethane-based initiators such as phenyl-substituted ethane, etc.; carbonyl-based initiators such as aromatic carbonyl compounds, etc.; redox-based initiators such as a combination of a persulfate salt and sodium hydrogen sulfite, a combination of a peroxide and sodium ascorbate, etc.; and so on. These polymerization initiators can be used singly as one species or in a combination of two or more species.

The polymerization initiator can be used in a usual amount and is not particularly limited. For instance, it can be selected from a range of about 0.005 by weight or above (preferably 0.01 part by weight or above) and of 1 part by weight or below (preferably 0.8 part by weight or below) relative to 100 parts by weight of all monomers.

Emulsion polymerization of the starting monomer mixture is usually carried out in the presence of an emulsifier. The emulsifier used in the emulsion polymerization is not particularly limited; known anionic emulsifiers, nonionic emulsifiers and the like can be used. These emulsifiers can be used singly as one species or in a combination of two or more species. The emulsifier can be used in an amount of, for instance, about 0.2 part by weight or greater (preferably 0.5 part by weight or greater) and, for instance, about 10 parts by weight or less (preferably 5 parts by weight or less) relative to 100 parts by weight of the monomers in total.

Non-limiting examples of anionic emulsifiers include sodium lauryl sulfate, ammonium lauryl sulfate, sodium dodecyl benzene sulfonate, sodium polyoxyethylene lauryl sulfate, sodium polyoxyethylene alkyl ether sulfates, ammonium polyoxyethylene alkyl phenyl ether sulfates, sodium polyoxyethylene alkyl phenyl ether sulfates, and sodium polyoxyethylene alkyl sulfosuccinates. Non-limiting examples of non-ionic emulsifiers include polyoxyethylene alkyl ethers, polyoxyethylene alkyl phenyl ethers, polyoxyethylene aliphatic acid esters, and polyoxyethylene-polyoxypropylene block polymers. Reactive functional group-containing emulsifiers (reactive emulsifiers) can be used as well. Examples of reactive emulsifiers include a radically polymerizable emulsifier having a structure of an aforementioned anionic emulsifier or nonionic emulsifier with a radically polymerizable group such as propenyl group and ally ether group introduced therein.

In the polymerization, a chain transfer agent (which may also be thought as a molecular weight modifier or a degree of polymerization regulator) may be used as necessary. The chain transfer agent can be one, two or more species selected from mercaptans such as n-dodecanethiol, t-dodecanethiol, glycidyl mercaptan, 2-mercaptoethanol, etc. Particularly preferable chain transfer agents include n-dodecanethiol and t-dodecanethiol. The amount of chain transfer agent used is not particularly limited. For instance, relative to 100 parts by weight of the starting monomer mixture, it can be about 0.001 part to 0.5 part by weight or it is usually preferably 0.01 part to 0.1 part by weight

According to the emulsion polymerization, a polymerization mixture can be prepared as an emulsion of acrylic polymer dispersed in water (acrylic polymer emulsion). The aqueous PSA composition disclosed herein may be preferably produced using the polymerization mixture or such a polymerization mixture upon suitable work-up. Alternatively, an acrylic polymer emulsion may be prepared by a polymerization method other than emulsion polymerization (e.g. solution polymerization, photopolymerization, bulk polymerization, etc.) to synthesize an acrylic polymer, then dispersing the polymer in water.

The weight average molecular weight (Mw) of the acrylic polymer is not particularly limited. For instance, it can be in a range of $10 \times 10^4$ to $500 \times 10^4$. From the standpoint of enhancing the adhesive properties, the acrylic polymer may have a Mw of preferably $150 \times 10^4$ or smaller, or more preferably $100 \times 10^4$ or smaller. From the standpoint of the cohesion, etc., the acrylic polymer may have a Mw of preferably $20 \times 10^4$ or larger, or more preferably $30 \times 10^4$ or larger, for example, $40 \times 10^4$ or larger.

As used herein, the Mw of an acrylic polymer refers to the Mw of the ethyl acetate-soluble portion (sol) of the acrylic polymer. The Mw of the acrylic polymer refers to the value based on standard polystyrene by gel permeation chromatography (GPC). The Mw of an acrylic polymer is determined by the next method in particular.

[Method for determining weight average molecular weight (Mw)]

The acrylic polymer of interest is suspended in ethyl acetate at room temperature for seven days to extract its soluble components. The extract of the soluble components is allowed to dry to obtain a measurement sample. The measurement sample is dissolved again in tetrahydrofuran (THF) to prepare a 0.1 % (by weight) THF solution. The THF solution is filtered with a filter having an average pore diameter of 0.45 $\mu$m and with respect to the resulting filtrate (sample solution for molecular weight measurement), the Mw based on standard polystyrene is determined by GPC measurement system. As the GPC measurement system, model name "HLC-8220 GPC" available from Tosoh Corporation can be used. The measurement conditions can be as follows:

[GPC Measurement Conditions]

Column: TSK gel GMH HR-H20
Detector: differential refractometer
Eluent: THF
Flow rate: 0.6 mL/min
Measurement temperature: 40 °C
Sample injection volume: 100 $\mu$L

In addition to the acrylic polymer as the base polymer, the water-dispersed PSA composition may include a non-acrylic polymer as a secondary component. As the non-acrylic polymer, one, two or more species can be used among various polymers such as rubber-based polymers, polyester-based polymers, urethane-based polymers, polyether-based polymers, silicone-based polymers, polyamide-based polymers and fluoropolymers known in the PSA field. When the water-dispersed PSA composition comprises a non-acrylic polymer in addition to the acrylic polymer, the non-acrylic polymer content relative to 100 parts by weight of the acrylic polymer is suitably 50 parts by weight or less, preferably 30 parts by weight or less, or more preferably 10 parts by weight or less. The non-acrylic polymer content to 100 parts by weight of the acrylic polymer can be 5 parts by weight or less, or even 1 part by weight or less. The art disclosed herein can be preferably practiced, for instance, in an embodiment where the acrylic polymer accounts for 99.5 % to 100 % by weight of the total polymer.

(Tackifier resin)

The water-dispersed PSA composition disclosed herein may further comprise a tackifier resin. Examples of the tackifier resin include petroleum-based tackifier resins, terpene-based tackifier resins, phenolic tackifier resins, and ketone-based tackifier resins, including rosin-based tackifier resins and rosin derivative tackifier resins. The PSA layer of the present invention comprises a tackifier resin, which is selected from the group, comprising rosin-based tackifier resins and rosin derivative tackifier resins, and combinations thereof.

Examples of the rosin-based tackifier resin include rosins such as gum rosin, wood rosin and tall oil rosin as well as stabilized rosins (e.g. stabilized rosins obtained by disproportionation or hydrogenation of the rosins), polymerized rosins (e.g. multimers, typically dimers, of the rosins) and modified rosins (e.g. unsaturated acid-modified rosins obtained by modification with an unsaturated acid such as maleic acid, fumaric acid or (meth)acrylic acid).

Examples of the rosin derivative tackifier resin include esterification products of the rosin-based tackifier resins (e.g. rosin esters such as stabilized rosin esters and polymerized rosin esters), phenol modification products of the rosin-based resins (phenol-modified rosins) and their esterification products (phenol-modified rosin esters).

Examples of the petroleum-based tackifier resin include aliphatic petroleum resins, aromatic petroleum resins, copolymeric petroleum resins, alicyclic petroleum resins and their hydrogenation products.

Examples of the terpene-based tackifier resin include $\alpha$-pinene resins, $\beta$-pinene resins, aromatic group-modified terpene-based resins, and terpene-phenol resins.

Examples of the ketone-based tackifier resin include ketone-based resins resulting from condensation of ketones (e.g. aliphatic ketones such as methyl ethyl ketone, methyl isobutyl ketone, acetophenone, etc.; alicyclic ketones such as cyclohexanone, methyl cyclohexanone, etc.) with formaldehyde.

The PSA sheet disclosed herein, as the tackifier resin, one, two or more species are selected and used among a rosin-based tackifier resin, rosin derivative tackifier resin and combination thereof. Among them, a rosin derivative tackifier resin is preferable. Favorable examples include rosin esters such as stabilized rosin ester and polymerized rosin ester.

The water-dispersed PSA composition comprising such a tackifier resin can be favorably prepared, using a water-dispersed tackifier resin in which the tackifier resin is dispersed in an aqueous solvent. For instance, a water dispersion of the acrylic polymer and the water-dispersed tackifier resin can be mixed to easily prepare a PSA composition that includes these components at a desirable ratio. A preferable water-dispersed tackifier resin is essentially free of at least an aromatic hydrocarbon-based solvent. This may provide a PSA sheet with reduced total volatile organic compounds (TVOC). It is more preferable to use a water-dispersed tackifier resin essentially free of an aromatic hydrocarbon-based solvent and other organic solvents.

Examples of commercial products of water-dispersed tackifier resins including rosin esters include trade names SUPER ESTER E-720 and SUPER ESTER E-730-55 available from Arakawa Chemical Industries, Ltd.; and trade names HARIESTER SK-90D, HARIESTER SK-70D, HARIESTER SK-70E and NEOTALL 115E available from Harima Chemicals Group, Inc. Commercial products of terpene-phenol resin (possibly in a form of water-dispersed terpene-phenol resin) include TAMANOL E-100, TAMANOL E-200 and TAMANOL E-200NT available from Arakawa Chemical Industries, Ltd.

The softening point of the tackifier resin is not particularly limited. From the standpoint of inhibiting a decrease in cohesive strength of the PSA layer, it is usually preferable to use a tackifier resin having a softening point of 80 °C or higher. The softening point of the tackifier resin can be 90 °C or higher, 100 °C or higher, 110 °C or higher, or even 120 °C or higher. A tackifier resin having a softening point of 130 °C or higher, or 140 °C or higher can be used as well. From the standpoint of the compatibility with the acrylic polymer and initial wettability to adherend, a tackifier resin having a softening point of 180 °C or lower can be preferably used.

The softening point of a tackifier resin as referred to herein is defined as a value measured based on the softening point test method (ring and ball method) specified in both JIS K5902 and JIS K2207. In particular, a sample is quickly melted at a lowest possible temperature, and with caution to avoid bubble formation, the melted sample is poured into a ring to the top, with the ring being placed on top of a flat metal plate. After cooled, any portion of the sample risen above the plane including the upper rim of the ring is sliced off with a small knife that has been somewhat heated. Following this, a support (ring support) is placed in a glass container (heating bath) having a diameter of 85 mm or larger and a height of 127 mm or larger, and glycerin is poured into this to a depth of 90 mm or deeper. Then, a steel ball (9.5 mm diameter, weighing 3.5 g) and the ring filled with the sample are immersed in the glycerin while preventing them from making contact. The temperature of glycerin is maintained at 20 °C $\pm$ 5 °C for 15 minutes. The steel ball is then placed at the center of the surface of the sample in the ring, and this is placed on a prescribed location of the support. While keeping the distance between the ring top and the glycerin surface at 50 mm, a thermometer is placed so that the center of the mercury ball of the thermometer is as high as the center of the ring, and the container is heated evenly by projecting a Bunsen burner flame at the midpoint between the center and the rim of the bottom of the container. After the temperature has reached 40 °C from the start of heating, the rate of the bath temperature rise must be kept at 5.0 °C $\pm$ 0.5 °C per minute. As the sample gradually softens, the temperature at which the sample flows out of the ring and finally touches the bottom plate is read as the softening point. Two or more measurements of softening point are performed at the same time, and their average value is used.

From the standpoint of obtaining preferable effects of the use, usually, the amount (based on non-volatiles) of the tackifier resin used is suitably 1 part by weight or greater to 100 parts by weight of the acrylic polymer; it can be 3 parts by weight or greater, 5 parts by weight or greater, or even 7 parts by weight or greater. From the standpoint of obtaining higher adhesive strength, in some embodiments, the amount of the tackifier resin used to 100 parts by weight of the acrylic polymer can be, for instance, 10 parts by weight or greater, 15 parts by weight or greater, 20 parts by weight or greater, or even 25 parts by weight or greater. From the standpoint of combining well-balanced cohesion and initial wettability to adherend, the amount of the tackifier resin used to 100 parts by weight of the acrylic polymer can be, for instance, 70 parts by weight or less, preferably 50 parts by weight or less, more preferably 40 parts by weight or less, or possibly 35 parts by weight or less. In some embodiments, the tackifier resin used to 100 parts by weight of the acrylic polymer can be, for instance, 33 parts by weight or less, 28 parts by weight or less, 23 parts by weight or less, 18 parts by weight or less, or even 13 parts by weight or less.

In some embodiments of the PSA sheet disclosed herein, the tackifier resin may include a high-softening point resin $T_H$ having a softening point of 140 °C or higher (typically 140 °C or higher and 180 °C or lower). In such an embodiment, from the standpoint of increasing the initial wettability, the amount of the high-softening-point resin $T_H$ used to 100 parts by weight of the acrylic polymer can be, for instance, 28 parts by weight or less, 23 parts by weight or less, 18 parts by weight or less, or even 13 parts by weight or less. The amount of the high-softening-point resin $T_H$ used to 100 parts by weight of the acrylic polymer can be, for instance, 1 part by weight or greater. From the standpoint of obtaining greater effects of its use, its amount can be 3 parts by weight or greater, 5 parts by weight or greater, or even 7 parts by weight or greater.

In some embodiments, the ratio of the high-softening-point resin $T_H$ in the tackifier resin can be, for instance, 10 % by weight or higher, 25 % by weight or higher, 50 % by weight or higher, 70 % by weight or higher, or even 90 % by weight or higher. As the tackifier resin, only one, two or more species of high-softening-point resin $T_H$ can be used. Alternatively, as the tackifier resin, only one, two or more species of tackifier resin not included in the high-softening-point resin $T_H$ (i.e. a tackifier resin having a softening point below 140 °C, e.g. a tackifier resin having a softening point at or above 100 °C and below 140 °C) can be used as well.

(Crosslinking agent)

The water-dispersed PSA composition used for forming PSA layers may include, as necessary, a crosslinking agent as long as the effects of this invention are not impaired. For the crosslinking agent, a suitable species can be selected and used among isocyanate-based crosslinking agents, epoxy-based crosslinking agents, oxazoline-based crosslinking agents, aziridine-based crosslinking agents, melamine-based crosslinking agents, peroxide-based crosslinking agents, urea-based crosslinking agents, metal alkoxide-based crosslinking agents, metal chelate-based crosslinking agents, metal salt-based crosslinking agents, carbodiimide-based crosslinking agents, hydrazine-based crosslinking agents, amine-based crosslinking agents, etc. These crosslinking agents can be typically added to water dispersions of pre-synthesized acrylic polymers (added afterwards) when used in preparation of water-dispersed PSA compositions. For the crosslinking agent, solely one species or a combination of two or more species can be used. The amount of the crosslinking agent used is not particularly limited. For instance, to 100 parts by weight of the acrylic polymer, it can be about 10 parts by weight or less (e.g. about 0.005 part to 10 parts by weight), about 5 parts by weight or less, or even about 1 part by weight or less.

As the isocyanate-based crosslinking agent, it is preferable to use an aqueous isocyanate-based crosslinking agent such as a self-emulsifying polyisocyanate, water-dispersible polyisocyanate and water-dispersible block isocyanate. Commercial products of the aqueous isocyanate-based crosslinking agent include products of DIC Corporation under trade names BURNOCK DNW-5000, BURNOCK DNW-5010, BURNOCK DNW-5100, BURNOCK DNW-5200 and BURNOCK DNW-5500; products of Nippon Polyurethane Industry Co., Ltd., under trade names AQUANATE 100, AQUANATE 105, AQUANATE 110, AQUANATE 120, AQUANATE 130, AQUANATE 200, AQUANATE 210; products of Mitsui Chemicals & SKC Polyurethanes Inc., under trade names TAKENATE WD-220, TAKENATE WD-240, TAKENATE WD-720, TAKENATE WD-725, TAKENATE WD-726, TAKENATE WD-730, TAKENATE WB-700, TAKENATE WB-720 and TAKENATE WB-920; products of Dai-ichi Kogyo Seiyaku Co., Ltd., under trade names ELASTRON BN-04, ELASTRON BN-11, ELASTRON BN-27, ELASTRON BN-69 and ELASTRON BN-77. These can be used singly as one species or in a combination of two or more species. In some embodiments, a water-dispersed PSA composition essentially free of an isocyanate-based crosslinking agent can be preferably used. The art disclosed herein may achieve both adhesive strength and ease of rework at a high level even for a PSA sheet that comprises a PSA layer formed from such a water-dispersed PSA composition. The water-dispersed PSA composition essentially free of an isocyanate-based crosslinking agent can be advantageous from the standpoint of the ease of quality management of PSA sheets and the storage stability of the PSA composition, etc.

The water-dispersed PSA composition may contain, as necessary, an acid or a base (aqueous ammonia, etc.) used for pH adjustment and so on. Examples of other optional components that can be contained in the composition include various additives generally used in the field of water-dispersed PSA compositions, such as viscosity-adjusting agent, leveling agent, plasticizer, filler, colorant including pigment and dye, etc., stabilizing agent, preservative, anti-aging agent, and so on. With respect to these various additives, those heretofore known can be used according to typical methods. Since these do not particularly characterize the present invention, detailed descriptions are omitted.

<PSA sheet>

The method for producing the PSA sheet disclosed herein is not particularly limited. For instance, a method where carrier film having an anchor layer is provided with a PSA layer formed from the water-dispersed PSA composition on its anchor layer can be preferably employed. In the carrier film having the anchor layer, the anchor layer may be formed during the manufacturing process of the plastic film.

The method for providing the PSA layer formed from the water-dispersed PSA composition on the anchor layer is not particularly limited. Various known methods can be suitably selected and used. In some embodiments, a direct method can be used where the PSA composition is directly provided (typically applied) onto the anchor layer of carrier film having the anchor layer and allowed to dry to form a PSA layer. In other embodiments, a transfer method can be employed where the PSA composition is provided to a releasable surface (release face) and allowed to dry to form a PSA layer on the surface and the PSA layer is transferred to the anchor layer of carrier film having the anchor layer. As the release face, the surface of release liner, the backside of carrier film after release treatment, and the like can be used. Because a highly smooth adhesive face can be easily obtained, it is preferable to form the PSA layer disclosed herein by a transfer method. A highly smooth adhesive face can be advantageous from the standpoint of the initial wettability relative to adherend.

The PSA composition can be applied, using a commonly known or used coater such as a gravure roll coater, reverse roll coater, kiss roll coater, dip roll coater, die coater, bar coater, knife coater and spray coater. Alternatively, the PSA composition can be applied by impregnation, a curtain coating method, etc. From the standpoint of accelerating the crosslinking reaction and increasing the productivity, the PSA composition is preferably dried with heat. The drying temperature can be, for instance, about 40 °C to 150 °C, or usually preferably about 60 °C to 130 °C. After dried, the PSA composition may be aged for purposes such as adjusting the migration of components in the PSA layer and the progress of the crosslinking reaction, and lessening deformation possibly present in the PSA sheet.

In the PSA sheet disclosed herein, the thickness of the PSA layer is not particularly limited. It can be, for instance, in a range of about 10 μm to 120 μm. In some embodiments, the thickness of the PSA layer can be, for instance, 15 μm or greater, usually suitably 20 μm or greater, 25 μm or greater, 30 μm or greater, or even 35 μm or greater. With increasing thickness of the PSA layer, the adhesive strength generally tends to increase. From the standpoint of preventing the occurrence of left-over adhesive residue due to cohesive fracture of the PSA layer, the thickness of the PSA layer can be, for instance, 100 μm or less, 75 μm or less, or even 60 μm or less.

The PSA sheet disclosed herein is not particularly limited in overall thickness (possibly including the PSA layer, anchor layer and carrier film, but excluding any release liner). The thickness may be about 15 μm to 5 mm. In some embodiments, the overall thickness of the PSA sheet can be, for instance, 30 μm or greater, 40 μm or greater, 50 μm or greater, or even 60 μm or greater. The overall thickness of the PSA sheet can be, for instance, about 500 μm or less, about 200 μm or less, about 150 μm or less, about 120 μm or less, about 100 μm or less, or even about 90 μm or less.

The PSA sheet disclosed herein shows an adhesive strength to stainless steel (to-SUS adhesive strength) of 6 N/20mm or greater. In some embodiments, the to-SUS adhesive strength can be, for instance, 8 N/20mm or greater, or even 10 N/20mm or greater. For instance, when the PSA sheet is used for fastening a component, greater adhesive strength of the PSA sheet can achieve sufficient fastening even with a smaller piece thereof. The maximum to-SUS adhesive strength is not particularly limited. From the standpoint of preventing left-over adhesive residue due to cohesive fracture of the PSA layer, in some embodiments, the to-SUS adhesive strength can be, for instance, 40 N/20mm or less, 30 N/20mm or less, or even 20 N/20mm or less. The to-SUS adhesive strength is determined by the method described later in Examples. The to-SUS adhesive strength can be adjusted, for instance, through the composition of monomers forming the acrylic polymer, the acrylic polymer's Mw, the type and amount of emulsifier used in polymerization, the use or absence of tackifier resin as well as the type and amount if any, the use or absence of crosslinking agent as well as the type and amount if any, the thickness of the PSA layer, and so on.

In the PSA sheet disclosed herein, the PSA layer shows an anchoring strength of 15 N/20mm or greater. The PSA sheet that shows such anchoring strength is highly re-workable even with high adhesive strength. This is preferable from the standpoint of facilitating application of the PSA sheet to adherend, increasing the yield and quality of components or products to which the PSA sheet is applied, increasing the productivity, etc. From the standpoint of easily combining adhesive strength and ease of rework at a higher level, in some embodiments, the anchoring strength is preferably about 17 N/20mm or greater, or more preferably about 19 N/20mm or greater. The maximum anchoring strength is not particularly limited. From the standpoint of the ease of manufacturing and ease of designing the PSA sheet, in some embodiments, the anchoring strength can be, for instance, 45 N/20mm or less, 35 N/20mm or less, or even 25 N/20mm or less. The anchoring strength is determined by the method described later in Examples. The anchoring strength can be adjusted through, for instance, the composition, thickness and formation method of the anchor layer, the material and constitution of the plastic film included in the carrier film; the composition, thickness and formation method of the PSA layer; and so on.

In the PSA sheet disclosed herein, the anchoring strength value $F_A$ (N/20mm) is preferably higher than the to-SUS adhesive strength value $F_P$ (N/20mm). In other words, $F_A - F_P$ is preferably greater than 0 N/20mm. The PSA sheet in such an embodiment may show good anti-residue properties to adherend even with high adhesive strength, providing excellent ease of rework. In some embodiments, $F_A - F_P$ can be, for instance, 3 N/20mm or greater, 4 N/20mm or greater, 5 N/20mm or greater, or even 7 N/20mm or greater. With increasing $F_A - F_P$, the anti-residue properties tend to improve. The upper limit of $F_A - F_P$ is not particularly limited. From the standpoint of combining well-balanced adhesive strength and ease of rework, in some embodiments, $F_A - F_P$ can be, for instance, 25 N/20mm or less, or even 20 N/20mm or less. The PSA sheet disclosed herein can be favorably made in an embodiment where $F_A - F_P$ is 15 N/20mm or less (e.g. 10 N/20mm or less) as well.

When the PSA sheet disclosed herein is placed on a horizontally-held glass plate with no applied pressure, at 5 seconds after this placement, it preferably shows a wet surface area of at least 60 % wherein the percent wet surface area is defined as the ratio of surface area where the glass plate is in contact with the PSA layer. "Without no applied pressure" means that besides the weight of the PSA sheet, no external pressure is applied to push the PSA sheet onto the glass plate. A high percent wet surface area of the PSA sheet indicates high initial wettability (a high degree of wetting immediately after contact) to the adherend surface. The PSA sheet with high initial wettability can quickly bond to the adherend surface even with weak bonding pressure. This is preferable from the standpoint of preventing improper placement during application, etc. In particular, a high percent wet surface area of the PSA sheet is advantageous when a small piece of the PSA sheet is applied or when the degree and evenness of bonding pressure are limited due to certain conditions such as the peripheral structure of where it is applied and the strength of the adherend (e.g. when the adherend is fragile or deformable, etc.). When the PSA sheet has a high percent wet surface area, for instance, the ease and precision of application may improve. The percent wet surface area is determined by the method described later in Examples. The percent wet surface area can be adjusted through the acrylic polymer's Tg and Mw as well as the composition of monomers forming the acrylic polymer, the use or absence of tackifier resin as well as the type and amount if any, the use or absence of crosslinking agent as well as the type and amount if any, the thickness of the PSA layer, and so on.

The purpose of the PSA sheet disclosed herein is not particularly limited. For instance, because of its high adhesive strength, in various parts and products, it can be favorably used for purposes such as fastening and joining (e.g. semi-permanent fastening and joining) of members. For instance, when the PSA sheet is used for fastening members, with increasing adhesive strength of the PSA sheet, the surface area of the PSA sheet required to achieve sufficient fastening may decrease. This is particularly significant in mobile devices (e.g. mobile electronics) for which miniaturization and weight reductions are desired. For instance, in mobile electronic devices (e.g. mobile phones, smartphones, tablet PCs, digital cameras, etc.) installed with displays such as liquid crystal, the PSA sheet disclosed herein can be preferably used for joining components such as display panels and cases. Thus, this description provides a mobile electronic device comprising at least two components and a PSA sheet (a PSA sheet disclosed herein) that fastens the at least two components. In this description, to be "mobile (portable)," it is unsatisfactory to be simply capable of being carried. Instead, it indicates a level of mobility (portability) that allows for relatively easy carriage by hand of an individual (a typical adult).

The PSA sheet disclosed herein may produce less TVOC (total volatile organic compounds) because it comprises a PSA layer formed from a water-dispersed PSA composition. Thus, it can be preferably used for joining or fastening various members in spaces that are air-tight and susceptible to temperature elevation, such as rooms of automobiles; and for fastening and building members or products such as building materials and furniture, which may be used in living spaces.

[Examples]

Several working examples related to the present invention are described below, but the present invention is not intended to be limited to these examples. In the description below, "parts" and "%" are by weight unless otherwise specified. In the description below, the respective properties were determined or evaluated as follows:

(Anchoring strength)

Each PSA sheet was cut to 20 mm in width and 100 mm in length to obtain a measurement sample 100 shown in Fig. 3. The measurement sample 100 is formed of a support substrate 102 and a PSA layer 101 supported by the support substrate 102. In an environment at 23 °C and 50 % RH, the back face 100B of the measurement sample 100 was applied and fixed via a commercial double-faced PSA sheet 105 onto a stainless steel plate (SUS plate) 110. As the double-faced PSA sheet 105, was used product No. 512 available from Nitto Denko Corporation. Subsequently, a commercial single-faced PSA sheet (20 mm wide, 100 mm long) 111 was layered over the adhesive face 100A of measurement sample 100 and press-bonded with a 2 kg roller moved back and forth once. As the single-faced PSA sheet 111, was used product No. 315 available from Nitto Denko Corporation. The press-bonding was carried out so as to bond measurement sample 100 to single-faced PSA sheet 111 with their adhesive faces 100A and 111A facing each other. During this, at an end of the length direction of measurement sample 100, about 90 μm thick paper strip (20 mm wide, 30 mm long) 112 was placed and fastened between the adhesive face 100A of measurement sample 100 and the adhesive face 11 1A of single-faced PSA sheet 111. Of the paper strip 112, in its length direction, from the end of the length direction of measurement sample 100, about 10 mm was between the adhesive face 100A of measurement sample 100 and the adhesive face 111A of single-faced PSA sheet 111 and the remaining about 20 mm extended outward from the end of the length direction of measurement sample 100. This was left standing in the same environment for 30 minutes. Subsequently, the exposed portion of the paper piece 112 was fixed with a chuck. Using a tensile tester, at a peel angle of 180° (in the arrow direction in the drawing), at a tensile speed of 300 mm/min, the PSA layer 101 and support substrate 102 in the measurement sample 100 were forcibly peeled apart and the peel strength (N/20mm) during this was measured. The resulting value was recorded as the anchoring strength (N/20mm). As the tensile tester, a universal tensile/compression tester (system name "TCM-1kNB" available from Minebea Co., Ltd.) was used. The measurement was taken three times (i.e. N = 3) and their average value was recorded as the anchoring strength of the PSA sheet.

(To-SUS adhesive strength)

Each PSA sheet was cut to 20 mm in width and 100 mm in length to prepare a measurement sample. In an environment at 23 °C and 50 %RH, the measurement sample was press-bonded, with a 2 kg roller moved back and forth once, onto a stainless steel plate (SUS304BA plate) as the adherend. This was left standing in the environment at 23 °C and 50 % RH for 30 minutes. Subsequently, based on JIS Z0237, using a tensile tester, at a tensile speed of 300 mm/min, the 180° peel strength (N/20mm) to SUS was determined. The measurement was carried out three times (i.e. N = 3) and their average value was recorded as the to-SUS adhesive strength of the PSA sheet.

(Ease of rework)

In the to-SUS adhesive strength measurement, the adherend surface after the measurement sample was removed and the measurement sample removed from the adherend were inspected. From the results, the ease of rework of the PSA sheet was evaluated on the following two grades:

    G: No left-over adhesive residue was found on the adherend surface (good ease of rework)
    P: Left-over adhesive residue was found on the adherend surface (poor ease of rework)

(Initial wettability)

Each PSA sheet was cut to a 5 cm square to prepare a test sample. In an environment at 23 °C and 50 % RH, the test sample was handheld by one end; with the adhesive face on the bottom, at about 10 mm above the top face of a horizontally-held glass plate (6.5 cm lengthwise, 16.5 cm crosswise piece of glass, a product of Matsunami Glass Ind., Ltd.), the sample was held horizontally (approximately in parallel to the top face of the glass plate). Subsequently, the sample was released from the hand and allowed to freely fall onto the glass plate. At 5 seconds after contact with the glass plate, an overhead image of the sample was taken. By analysis of the image, the ratio of the surface area of the sample's adhesive face in contact with the glass plate relative to the total surface area of the sample was determined as the percent wet surface area. From the results, the initial wettability of the PSA sheet was evaluated on the following three grades:

    G: wet surface area at or above 60 % (good initial wettability)
    A: wet surface area above 40 % and below 60 % (practically acceptable initial wettability)
    P: wet surface area at or below 40 % (poor initial wettability)

<Fabrication of PSA sheets>

(Example 1)

(Preparation of aqueous acrylic polymer dispersion)

In 100 parts of ion-exchanged water, were mixed and emulsified a monomer mixture formed of 85 parts of 2EHA, 13 parts of MA, 1.2 parts of AA, 0.8 part of MAA and 0.02 part of 3-methacryloxypropyltrimethoxysilane (trade name KBM-503 available from Shin-Etsu Chemical Co., Ltd.); 0.048 part of a tertiary lauryl mercaptan (chain transfer agent); and 2.0 part of an emulsifier to prepare an aqueous emulsion of the monomer mixture (monomer emulsion). As the emulsifier, was used a sodium polyoxyethylene alkyl ether sulfate (trade name LATEMULE E-118B available from Kao Corporation).

To a reaction vessel equipped with a condenser, nitrogen inlet, thermometer and stirrer, the monomer emulsion was added and allowed to stir at room temperature for at least one hour under a nitrogen flow. Subsequently, the system was heated to 60 °C. To the reaction vessel, was added 0.1 part of 2,2'-azobis[N-(2-carboxyethyl)-2-methylpropionamidine]hydrate (polymerization initiator) (trade name "VA-057" available from Wako Pure Chemical Industries, Ltd.). While keeping the system at 60 °C, the monomer emulsion was reacted for six hours. After the system was cooled to room temperature, 10 % ammonia water was added to pH 7.5 to obtain a water dispersion 1-W of acrylic polymer (base polymer). This acrylic polymer has a Tg of about -60 °C when determined by the Fox equation.

(Preparation of water-dispersed PSA composition)

To the water dispersion 1-W, based on non-volatiles, was added 30 parts of tackifier resin to 100 parts of the acrylic polymer in the water dispersion. Using 10 % ammonia water as pH-adjusting agent and polyacrylic acid (aqueous solution, 36 % non-volatiles) as thickener, the pH was adjusted to about 7.5 and the viscosity to about 9 Pa·s. As for the tackifier resin, the product shown in Table 1 was used. A water-dispersed acrylic PSA composition 1-C was thus obtained.

(Fabrication of PSA sheets)

The resulting PSA composition 1-C was applied onto the release face of PET film (release film) having a release face on one side and allowed to dry at 120 °C for 3 minutes to form a 50 $\mu$m thick PSA layer on the release face. As a support substrate 1-F, was used 25 $\mu$m thick PET film having an about 10 nm to 70 nm thick urethane-based anchor layer on one face. The PSA layer on the release film was adhered to the anchor layer face of the support substrate 1-F (transfer method) to fabricate a PSA sheet according to this Example.

(Examples 2 to 4)

With the types and amounts of tackifier resin and thicknesses of the PSA layers as shown in Table 1, otherwise in the same manner as Example 1, were fabricated PSA sheets according to these Examples.

(Example 5)

The monomer composition was changed to 30 parts 2EHA, 70 parts BA, 3 parts AA and 0.03 part 3-methacryloxipropyltrimethoxysilane (product name KBM-503, a product of Shin-Etsu Chemical Co., Ltd.). Otherwise in the same manner as the preparation of water dispersion W-1, was obtained an acrylic polymer water dispersion W-2. The acrylic polymer's Tg is determined to be about -57 °C by the Fox equation. Using the water dispersion 2-W and the tackifier resin shown in Table 1, but otherwise in the same manner as Example 1, was fabricated a PSA sheet according to this Example.

(Example 6)

As the support substrate, was used 25 $\mu$m thick anchor-layer-free PET film (product name LLTMIRROR S10, a product of Toray Industries, Inc.) 6-F. Otherwise in the same manner as Example 2, was fabricated a single-faced PSA sheet according to this Example.

(Example 7)

To the water dispersion 1-W, was added 0.5 part of isocyanate-based crosslinking agent to 100 parts of the acrylic polymer in the water dispersion. The tackifier resin shown in Table 1 was used. In place of the support substrate 1-F, was used the support substrate 6-F. Otherwise in the same manner as Example 1, was fabricated a PSA sheet according to this Example. As the isocyanate-based crosslinking agent, was used a water-dispersed polyisocyanate (product name BURNOCK DNW-5010, a product of DIC Corporation).

(Example 8)

As a support substrate 8-F, was used 25 $\mu$m thick PET film having an acrylic anchor layer (thickness at or above about 2 $\mu$m and below 5 $\mu$m) on one face. Otherwise in the same manner as Example 4, was fabricated a PSA sheet according to this Example.

[Table 1]

Table 1

| | | Example | 1 | 2 | 3 | 4 | 5 | 6 | 7 | 8 |
|---|---|---|---|---|---|---|---|---|---|---|
| PSA | | Thickness (μm) | 50 | 50 | 20 | 38 | 50 | 50 | 50 | 38 |
| | Base polymer (parts) | 2EHA/MA/AA/MAA/KBM503 = 85/13/1.2/0.8/0.02 | 100 | 100 | 100 | 100 | - | 100 | 100 | 100 |
| | | 2EHA/BA/AA/KBM503 =30/70/3/0.03 | - | - | - | - | 100 | - | - | - |
| | Tackifier resin (parts) | Super Ester E-730-55 | 30 | - | - | - | - | - | - | - |
| | | Super Ester E-865NT | - | 10 | 10 | - | - | 10 | - | - |
| | | Super Ester KE802 | - | - | - | 10 | - | - | - | 10 |
| | | Tamanol E-200NT | - | - | - | - | 30 | - | 30 | - |
| | Isocyanate-based crosslinking agent (parts) | | - | - | - | - | - | - | 0.5 | - |
| Support substrate | | Type | 1-F | 1-F | 1-F | 1-F | 1-F | 6-F | 6-F | 8-F |
| | | Anchor layer | Urethane -based | Urethane -based | Urethane -based | Urethane -based | Urethane -based | - | - | Acrylic |
| Anchoring strength $F_A$ (N/20mm) | | | 22.5 | 20 | 20 | 20 | 13 | 14.5 | 12.5 | - |
| to-SUS adhesive strength $F_P$ (N/20mm) | | | 13.5 | 12 | 6.2 | 16.1 | 15 | 12 | 11.5 | - |
| $F_A - F_P$ (N/20mm) | | | 9 | 8 | 13.8 | 3.9 | -2 | 2.5 | 1 | |
| Ease of rework | | | G | G | G | G | P | P | P | P |
| Initial wettability | | | G | G | G | G | P | G | G | G |

Super Ester E-730-55: a product of Arakawa Chemical Ind., Ltd. (sp = 125 °C, aqueous stabilized rosin ester dispersion)
Super Ester E-865NT: a product of Arakawa Chemical Ind., Ltd. (sp = 160 °C, aqueous polymerized rosin ester dispersion)
Super Ester KE-802: a product of Arakawa Chemical Ind., Ltd. (sp = 160 °C, aqueous polymerized rosin ester dispersion)
Tamanol E-200NT: a product of Arakawa Chemical Ind., Ltd. (sp = 150 °C, aqueous terpene phenol dispersion)

As shown in Table 1, with respect to the PSA sheets according to Examples 1-4, high to-SUS adhesive strength was combined with good ease of rework. On the other hand, with respect to the PSA sheets having lower anchoring strength according to Examples 5 to 7, to-SUS adhesive strength of at least 6 N/20mm was not combined with good ease of rework. As for Example 5 in which BA was the primary monomer of the acrylic polymer, poor initial wettability was observed. With respect to the PSA sheet according to Example 8, peeling occurred between the anchor layer and PET film (plastic film) during the measurement of anchoring strength, and the anchoring strength of the PSA layer was not properly determined. Similar peeling between the anchor layer and PET film also occurred during the measurement of to-SUS adhesive strength, not allowing proper measurement.

Although specific embodiments of the present invention have been described in detail above, these are merely for illustrations and do not limit the scope of claims.

[Reference Signs List]

1, 2 PSA sheets
10 carrier film
10A first face
10B second face
14, 15 PSA layers
14A, 15A adhesive faces
22, 24 release liners
60, 70 release liner-bearing PSA sheets

**Claims**

1.  A pressure-sensitive adhesive sheet comprising

    a pressure-sensitive adhesive layer formed form a water-dispersed pressure-sensitive adhesive composition,
    carrier film supporting the pressure-sensitive adhesive layer, and
    an anchor layer placed between the pressure-sensitive adhesive layer and the carrier film; wherein
    the carrier film comprises plastic film forming at least its anchor layer side,
    the pressure-sensitive adhesive layer comprises an acrylic polymer as its base polymer,
    the acrylic polymer is a polymer of monomers including 70 % (by weight) or more alkyl (meth)acrylate whose ester terminus has an alkyl group with 6 to 10 carbon atoms,
    the pressure-sensitive adhesive layer shows an anchoring strength of 15 N/20mm or greater as measured as described in the specification, and
    the pressure-sensitive adhesive sheet shows an adhesive strength to stainless steel of 6 N/20mm or greater as measured as described in the specification,
    wherein the pressure-sensitive adhesive sheet has a urethane-based anchor layer as the anchor layer, and
    wherein the pressure-sensitive adhesive layer comprises a tackifier resin, which is selected from the group, comprising rosin-based tackifier resins and rosin derivative tackifier resins, and combinations thereof.

2.  The pressure-sensitive adhesive sheet according to Claim 1, showing a wet surface area of 60 % or greater when placed on a horizontally-held glass plate with no applied pressure, wherein the percent wet surface area is defined as the ratio of surface area where the glass plate and the pressure-sensitive adhesive layer are in contact at 5 seconds after the placement as measured as described in the specification.

3.  The pressure-sensitive adhesive sheet according to Claim 1 or 2, wherein the anchor layer has a thickness less than 10 μm.

4.  The pressure-sensitive adhesive sheet according to any one of Claims 1 to 3, wherein the tackifier resin content is 5 parts by weight or greater and 30 parts by weight or less to 100 parts by weight of the acrylic polymer.

5.  The pressure-sensitive adhesive sheet according to any one of Claims 1 to 4, wherein the acrylic polymer has a glass transition temperature of -50 °C or lower, as defined in the specification.

**6.** The pressure-sensitive adhesive sheet according to any one of Claims 1 to 5, wherein the plastic film is polyester film.

**7.** The pressure-sensitive adhesive sheet according to any one of Claims 1 to 6, wherein the anchoring strength is higher by at least 4 N/20mm than the adhesive strength.

**Patentansprüche**

**1.** Druckempfindliche Klebefolie, umfassend

eine druckempfindliche Klebstoffschicht, gebildet aus einer wasserdispergierten druckempfindlichen Klebstoffzusammensetzung,
eine Trägerfolie, unterstützend die druckempfindliche Klebstoffschicht, und
eine Ankerschicht, angeordnet zwischen der druckempfindlichen Klebstoffschicht und der Trägerfolie ist; wobei die Trägerfolie eine Kunststofffolie, bildend zumindest ihre Ankerschichtseite, umfasst,
die druckempfindliche Klebstoffschicht ein Acrylpolymer als ihr Basispolymer umfasst,
das Acrylpolymer ein Polymer aus Monomeren ist, beinhaltend 70 % (nach Gewicht) oder mehr Alkyl(meth)acrylat, dessen Esterterminus eine Alkylgruppe mit 6 bis 10 Kohlenstoffatomen besitzt,
die druckempfindliche Klebstoffschicht eine Verankerungsfestigkeit von 15 N/20mm oder mehr aufweist, gemessen wie in der Spezifikation beschrieben, und
die druckempfindliche Klebefolie eine Klebefestigkeit auf Edelstahl von 6 N/20mm oder mehr aufweist, gemessen wie in der Spezifikation beschrieben,
wobei die druckempfindliche Klebefolie eine Urethan-basierte Ankerschicht als Ankerschicht besitzt, und
wobei die druckempfindliche Klebstoffschicht ein Tackifier-Harz umfasst, das aus der Gruppe ausgewählt ist, umfassend Kolophonium-basierte Tackifier-Harze und Kolophonium-Derivat Tackifier-Harze, und Kombinationen davon.

**2.** Die druckempfindliche Klebefolie nach Anspruch 1, aufweisend eine nasse Oberfläche von 60 % oder mehr, wenn sie ohne Druck auf eine horizontal gehaltene Glasplatte gelegt wird, wobei der prozentuale Anteil der nassen Oberfläche als das Verhältnis der Oberfläche definiert ist, an der die Glasplatte und die druckempfindliche Klebeschicht 5 Sekunden nach dem Auflegen in Kontakt sind, wie in der Beschreibung gemessen.

**3.** Die druckempfindliche Klebefolie nach Anspruch 1 oder 2, wobei die Ankerschicht eine Dicke von weniger als 10 μm besitzt.

**4.** Die druckempfindliche Klebefolie nach irgendeinem der Ansprüche 1 bis 3, wobei der Gehalt an Tackifier-Harz 5 Gewichtsteile oder mehr und 30 Gewichtsteile oder weniger auf 100 Gewichtsteile des Acrylpolymers ist.

**5.** Die druckempfindliche Klebefolie nach irgendeinem der Ansprüche 1 bis 4, wobei das Acrylpolymer eine Glasübergangstemperatur von -50 °C oder weniger besitzt, wie in der Beschreibung definiert.

**6.** Die druckempfindliche Klebefolie nach irgendeinem der Ansprüche 1 bis 5, wobei die Kunststofffolie eine Polyesterfolie ist.

**7.** Die druckempfindliche Klebefolie nach irgendeinem der Ansprüche 1 bis 6, wobei die Verankerungsfestigkeit um mindestens 4 N/20 mm höher ist als die Klebefestigkeit.

**Revendications**

**1.** Feuille adhésive sensible à la pression comprenant

une couche adhésive sensible à la pression formée à partir d'une composition adhésive dispersée dans l'eau sensible à la pression,
film de support supportant la couche adhésive sensible à la pression, et
une couche d'ancrage placée entre la couche adhésive sensible à la pression et le film de support ;
le film de support comprenant un film en plastique formant au moins son côté de couche d'ancrage,
la couche adhésive sensible à la pression comprenant un polymère acrylique comme son polymère de base,

le polymère acrylique étant un polymère de monomères incluant 70 % (en poids) ou plus de (méth)acrylate d'alkyle dont une terminaison ester possède un groupe alkyle ayant de 6 à 10 atomes de carbone,

la couche adhésive sensible à la pression montrant une force d'ancrage de 15 N/20 mm ou plus telle que mesurée telle que décrite dans la description, et

la feuille adhésive sensible à la pression montrant une force d'adhésion à l'acier inoxydable de 6 N/20 mm ou plus tel que mesuré tel que décrit dans la description,

la feuille adhésive sensible à la pression ayant une couche d'ancrage à base d'uréthane comme couche d'ancrage, et

la couche adhésive sensible à la pression comprenant une résine donnant du collant, qui est sélectionnée dans le groupe, comprenant des résines donnant du collant à base de colophane et des résines donnant du collant dérivées de colophane, et de leurs combinaisons.

2.  Feuille adhésive sensible à la pression selon la revendication 1, montrant une surface humide de 60 % ou plus lorsque placée sur une plaque en verre maintenue horizontalement sans pression appliquée, la surface humide en pourcentage étant définie comme rapport de la surface où la plaque en verre et la couche adhésive sensible à la pression se trouvent en contact à 5 secondes après la mise en place tel que mesuré tel que décrit dans la description.

3.  Feuille adhésive sensible à la pression selon la revendication 1 ou 2, la couche d'ancrage ayant une épaisseur inférieure à 10 pm.

4.  Feuille adhésive sensible à la pression selon l'une quelconque des revendications 1 à 3, la teneur de la résine donnant du collant étant de 5 parties en poids ou plus et de 30 parties en poids ou moins à 100 parties en poids du polymère acrylique.

5.  Feuille adhésive sensible à la pression selon l'une quelconque des revendications 1 à 4, le polymère acrylique ayant une température de transition vitreuse de -50°C ou moins, telle que définie dans la description.

6.  Feuille adhésive sensible à la pression selon l'une quelconque des revendications 1 à 5, le film en plastique étant un film de polyester.

7.  Feuille adhésive sensible à la pression selon l'une quelconque des revendications 1 à 6, la force d'ancrage étant supérieure d'au moins 4 N/20 mm à la force d'adhésion.

[Fig. 1]

[Fig. 2]

[Fig. 3]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017087545 A
- JP 2015059132 A
- JP 2012188511 A
- JP 5411580 B
- WO 2016006455 A1
- JP 2007051271 A

**Non-patent literature cited in the description**

- Polymer Handbook. John Wiley & Sons, 1989